# EUROPÄISCHE PATENTSCHRIFT

(11) **EP 2 088 062 B1**
(45) Veröffentlichungstag und Bekanntmachung des Hinweises auf die Patenterteilung: **30.03.2011**
(21) Anmeldenummer: 09161464.4
(22) Anmeldetag: 03.09.2005
(51) Int. Cl.: B62D 53/08, B62D 53/06, B62D 35/00

(54) **Verstellvorrichtung, Windabweisersystem, Steuergerät und Vorrichtung zur Verringerung des Luftwiderstandes eines Sattelzuges**
Adjustment device, wind breaker system, control device and device for reducing the wind resistance of an articulated lorry
Dispositif de réglage, système de déflecteur d'air, appareil de commande et dispositif de réduction de la résistance à l'air d'un train routier

(30) Priorität: 18.09.2004 DE 102004045662
(43) Veröffentlichungstag der Anmeldung: 12.08.2009
(62) Teilanmeldung aus: 05784886.3
(73) Patentinhaber: Jost-Werke GmbH, 63263 Neu-Isenburg (DE)
(72) Erfinder: Algüera, José, 63739, Aschaffenburg (DE)
(74) Vertreter: Mehler, Klaus

(56) Entgegenhaltungen:
- EP-A2- 1 031 497
- WO-A1-03/059722
- DE-A1- 19 839 357
- JP-A- 2002 302 073
- SU-A1- 673 517
- US-A- 4 102 548
- US-A- 5 863 057

## Beschreibung

Die Erfindung betrifft eine Vorrichtung zur Verringerung des Luftwiderstandes eines Sattelzugs.

Verschiebevorrichtungen sind beispielsweise aus der DE-AS 17 80 488, der EP 0 503 954 A1 oder der DE 199 44 684 C1 bekannt.

Ferner ist aus der WO 02/070328 A1 eine Verschiebevorrichtung bekannt, die zwei Führungsschienen mit Zahnleisten aufweist, auf denen ein Schlitten verschiebbar gelagert ist, der eine Sattelkupplung trägt. Am Schlitten ist eine Verriegelungseinrichtung mit Blockierstücken angeordnet, die in die Zahnleisten eingreifen. Derartige Verschiebevorrichtungen können beispielsweise entsprechend der US 5,863,057 in ein Last-Ausgleichs-System integriert sein, wobei durch ein Verschieben der Sattelkupplung Einfluss auf die Achslast des Zugfahrzeugs genommen wird. Beim grenzüberschreitenden Verkehr kann dadurch die in den jeweiligen Staaten maximal zulässige Achslast manuell oder satellitengestützt eingestellt werden.

Außer einer horizontalen Verschiebung der Sattelkupplung ist es auch möglich, ein Anheben und Absenken der Sattelkupplung durchzuführen, da die Auflieger unterschiedliche Höhen aufweisen können, so dass eine entsprechende Anpassung vorzunehmen ist. Für diese Zwecke gibt es Hubvorrichtungen, die beispielsweise in der DE 198 929 A1 oder DE 198 39 357 A1 beschrieben werden.

Da die Sattelkupplung sehr große Kräfte nicht nur in vertikaler Richtung, sondern auch große Kräfte in Fahrtrichtung sowie große Seitenkräfte aufnehmen muss, ist eine hohe Stabilität der Hubvorrichtung in Bezug auf den Fahrzeugrahmen in allen Richtungen erforderlich, und zwar sowohl im abgesenkten als auch im angehobenen Zustand. Die Hubvorrichtung gemäß der DE 198 39 357 A1 besitzt daher eine Grundplatte, an der Hebelarme um eine horizontale Achse schwenkbar gelagert sind. Am anderen Ende der Hebelarme sind die Sattelkupplung sowie die Ausstellarme befestigt. Zwischen den Ausstellarmen und den Hebelarmen sind Druckmittelzylinder angeordnet, um die Hubvorrichtung anzuheben bzw. abzusenken. Diese Hubvorrichtung ist zwar fernbedienbar, jedoch muss der Fahrer die jeweilige Hubhöhe an Ort und Stelle überprüfen.

Die bisher bekannten Verschiebe- und Hubeinrichtungen sind dafür ausgelegt, vor Beginn der Fahrt eine Anpassung an die Auslegung von Zugfahrzeug und Auflieger vorzunehmen. Es hat sich jedoch gezeigt, dass der Spalt oder Zwischenraum, der zwischen der Aufliegerfront und dem Fahrerhaus der Zugmaschine entsteht, während der Fahrt zu aerodynamischen Verwirbelungen führt, die den Luftwiderstand und somit den Kraftstoffverbrauch des Sattelzuges beeinflussen.

Um diesem Effekt entgegenzuwirken, werden häufig Windabweiser verwendet, um die Luft gezielt über den Spalt zu leiten. Diese sind schwer, teuer und fest installiert. Ein Umbau muss manuell durchgeführt wird, was ist in der Regel nur vom Zwischenraum aus möglich ist. Die EP 1 031 497 A2 beschreibt einen motorisch in der Neigung verstellbaren Dachspoiler für einen Lastkraftwagen. Im Falle einer Leerfahrt oder eines angekuppelten Anhängers oder Aufliegers mit geringerer Bauhöhe kann der Dachspoiler zur Verringerung des Luftwiderstandes in eine niedrige Position verfahren werden. Nach Aufnahme eines hoch aufragenden Anhängers oder Aufliegers ist es möglich, den Dachspoiler aufzustellen und den Fahrtwind über diesen hinweg zu lenken.

Es ist grundsätzlich sinnvoll, diesen Spalt oder Zwischenraum so klein wie möglich zu gestalten. Andererseits könnte ein zu kleiner Spalt wiederum dazu führen, dass bei Kurvenfahrt die Ecken des Sattelanhängers gegen die Rückwand des Fahrerhauses schlagen.

Auch kann es Situationen geben, bei denen es sinnvoll ist, einen großen Spalt zuzulassen, um beispielsweise Platz für Aggregate zu schaffen oder im Stand die Zugänglichkeit zu den Versorgungsleitungen für den Sattelanhänger zu verbessern.

Mit den bekannten Verschiebeeinrichtungen ist zwar ein Verschieben des Aufliegers möglich, der Fahrer muss jedoch die Mechanik der Verschiebeeinrichtung öffnen, dann das Spaltmaß durch Verfahren der Zugmaschine verändern, die Mechanik wieder verriegeln und sich von deren ordnungsgemäßen Verriegelungszustand überzeugen. Dieser Vorgang erfordert einiges an Übung und kann zu erheblicher körperlicher Belastung bei den Fahrern führen. Zudem ist dies immer nur möglich, während das Fahrzeug steht, nicht aber während der Fahrt.

Es ist daher Aufgabe der Erfindung, eine Vorrichtung sowie ein Steuergerät bereitzustellen, mit denen es möglich ist, auch während der Fahrt die Position des Aufliegers relativ zum Zugfahrzeug zu verändern, insbesondere den Luftwiderstand des Sattelzugs bei hohen Geschwindigkeiten zu reduzieren.

Die Aufgabe wird gemäß einer ersten Alternative mit einer Vorrichtung zur Verringerung des Luftwiderstandes gelöst, bei der eine Verschiebeeinrichtung zum Verschieben der Sattelkupplung in Längsrichtung des Zugfahrzeugs und mindestens ein schwenkbar zum Fahrerhaus des Zugfahrzeugs angeordneter Windabweiser vorgesehen sind, wobei die Verschiebeeinrichtung und der Windabweiser über motorische Antriebseinrichtungen und Positionssensoren verfügen, wobei die Antriebseinrichtungen und die Positionssensoren an eine gemeinsame Steuereinrichtung angeschlossen sind.

Die erfindungsgemäße Vorrichtung gemäß einer zweiten Alternative ist eine Vorrichtung zur Verringerung des Luftwiderstandes eines Sattelzuges aus Zugfahrzeug und Auflieger, die eine Hubeinrichtung zum Anheben oder Absenken der Sattelkupplung und ein schwenkbar am Fahrerhaus angeordnetes Windabweisersystem vorsieht, wobei die Hubeinrichtung und das Windabweisersystem über motorische Antriebe und Positionssensoren verfügen, wobei die Antriebseinrichtungen und die Positionssensoren an eine gemeinsame Steuereinrichtung angeschlossen sind.

Beispielhafte Ausführungsformen der Erfindung werden nachfolgend anhand der Zeichnungen näher erläutert.

Es zeigen:
- Figuren 1, 2a, 2b und 3: Seitenansichten eines Sattelzuges mit unterschiedlichen Aufliegerpositionen,
- Figur 4: eine Seitenansicht einer Verschiebeeinrichtung,
- Figur 5: eine perspektivische Draufsicht auf eine Verschiebeeinrichtung,
- Figur 6: eine Seitenansicht einer Verstelleinrichtung mit Verschiebeeinrichtung und Hubeinrichtung,
- Figur 7: die Seitenansicht eines Windabweisers und
- Figur 8: ein Block-Schaltbild eines Steuergerätes und
- Figur 9: ein beispielhaftes Kennliniendiagramm.

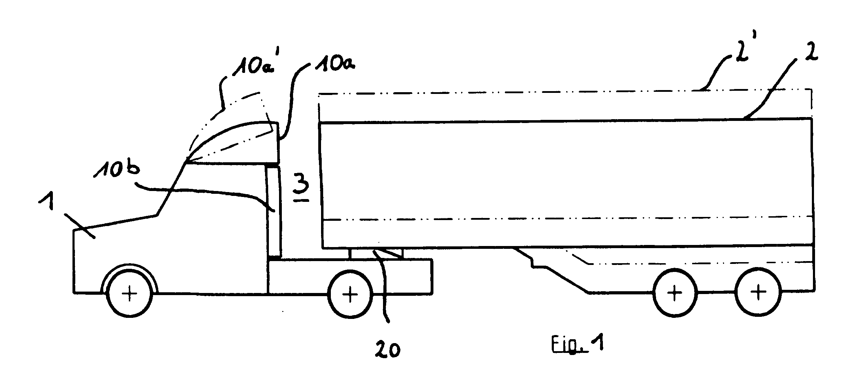

In den Figuren 1 bis 3 ist jeweils ein Sattelzug bestehend aus einem Zugfahrzeug 1 und einem Auflieger 2 in verschiedenen Positionen dargestellt. Das Zugfahrzeug 1 besitzt eine Verstellvorrichtung 20 mit einer darauf angeordneten Sattelkupplung, in die der Auflieger 2 mit seinem Königszapfen eingreift. In den Figuren 1 bis 3 ist die Sattelkupplung nicht, und die Verstellvorrichtung nur schematisch dargestellt. Ferner besitzt das Zugfahrzeug 1 auf seinem Dach 4 einen verschwenkbaren Windabweiser 10a sowie seitliche Windabweiser 10b am Fahrerhaus.

In der Figur 1 befindet sich der Auflieger 2' in angehobener Position. Der Windabweiser 10a' befindet sich in hochgeschwenkter Position. Um den Luftwiderstand zu verringern, kann der Auflieger in die Position 2 abgesenkt werden, indem die Verstellvorrichtung 20 sowie das Fahrgestell des Aufliegers abgesenkt werden. Das Absenken des Fahrgestells erfolgt vorzugsweise über die verstellbare Federung, insbesondere die Luftfederung des Aufliegers, die zu diesem Zweck an die Steuereinrichtung der Verstellvorrichtung 20 angeschlossen ist.

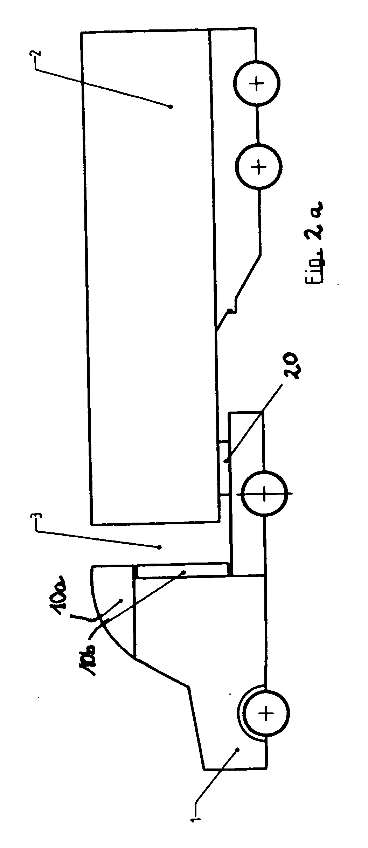

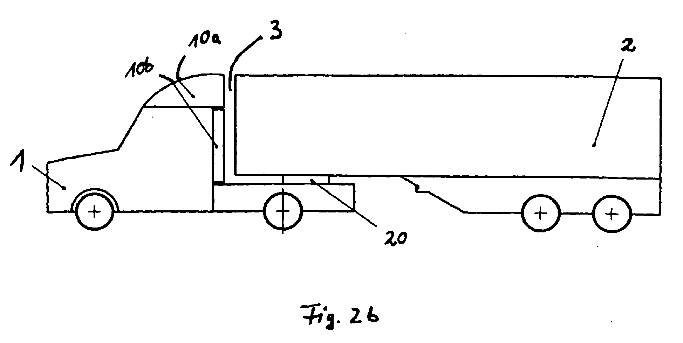

In der Figur 2a befindet sich der Auflieger 2 in einer abgesenkten Position, so dass die Oberkante des Aufliegers auf gleicher Höhe liegt wie der Scheitel des Windabweisers 10a, der sich ebenfalls in abgesenkter Position befindet. In dieser Anordnung ist der Zwischenraum 3 zwischen dem Fahrerhaus 1 und der Vorderfront des Aufliegers 2 relativ groß, so dass es in diesem Zwischenraum bei schneller Autobahnfahrt zu Verwirbelungen kommt, die das Fahrzeug bremsen. Um hier Abhilfe zu schaffen, ist es möglich, mittels der Verstellvorrichtung 20 die Sattelkupplung nach links zu verschieben, so dass der Zwischenraum 3 entsprechend kleiner wird, wie dies in der Figur 2b dargestellt ist.

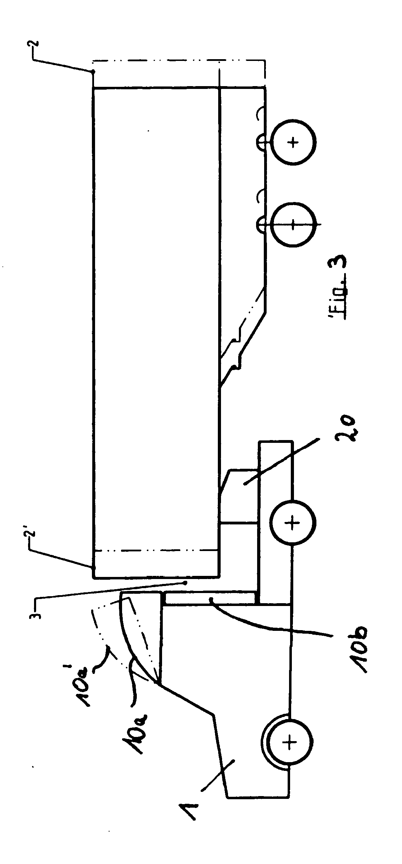

In der Figur 3 ist eine angehobene Position des Aufliegers 2/2' mit kleinem und großem Zwischenraum 3 dargestellt. Diese angehobene Position ist bei unebenem Gelände oder für extreme Rangiermanöver zweckmäßig.

Alle gezeigten Positionsänderungen können während der Fahrt durchgeführt werden.

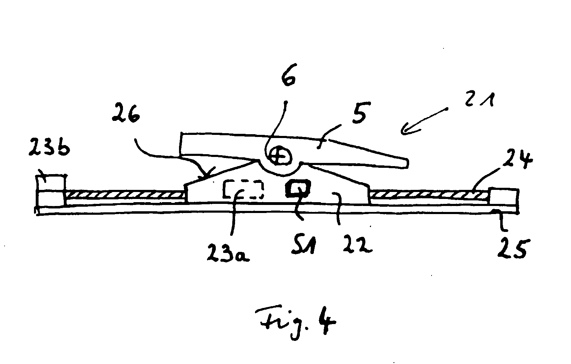

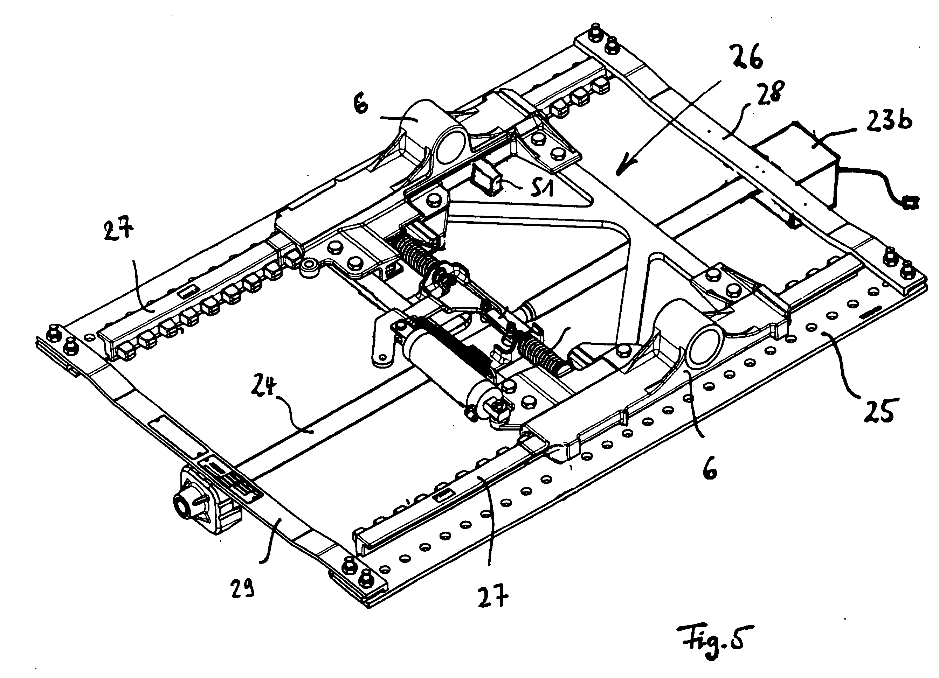

In der Figur 4 ist die Seitenansicht einer Verschiebeeinrichtung 21 schematisch dargestellt. Auf einem Rahmen 25, der auf dem Zugfahrzeug montiert ist, ist ein Schlitten 26 verschiebbar angeordnet. Hierzu sind an einem Rahmen 25 Führungsschienen 27 angeordnet, wie dies in der Figur 5 dargestellt ist. Am Schlitten 26 sind Lagerböcke 6 zur Aufnahme der Sattelkupplung 5 befestigt.

Dieser Schlitten 26 wird von einer Antriebsspindel 24 und einem motorischen Antrieb 23a oder 23b angetrieben, wobei die Antriebsspindel 24 an einer Spindelmutter 22 am Schlitten 26 angreift, die in Figur 5 verdeckt ist. Der motorische Antrieb 23a kann somit auf dem Schlitten 26 oder aber als motorischer Antrieb 23b auf einer Traverse 28 des Rahmens 25 angeordnet sein, wie dies in Figur 5 gezeigt ist. Die Antriebsspindel 24 ist auf einer Traverse 29 des Rahmens 25 drehbar gelagert. Während des Verstellens des Schlittens 26 bleibt der Formschluss zwischen Spindelmutter 22 und Antriebsspindel 24 erhalten, so dass auch ein Verstellen während der Fahrt möglich ist.

Am Schlitten 26 ist ferner ein erster Positionssensor S1 angebracht, der beispielsweise als induktiver Sensor mit entsprechenden Gegenstücken beispielsweise an der Führungsschiene 27 zusammenwirkt und auf diese Weise die Position des Schlittens 26 auf dem Rahmen 25 bzw. bezüglich der Führungsschiene 27 detektiert. Dieser erste Positionssensor S1 ist an eine in Figur 4 und 5 nicht dargestellte Steuereinrichtung angeschlossen. Dies gilt auch für die motorische Antriebseinrichtung 23a bzw. 23b, die ebenfalls an die Steuereinrichtung elektrisch angeschlossen ist.

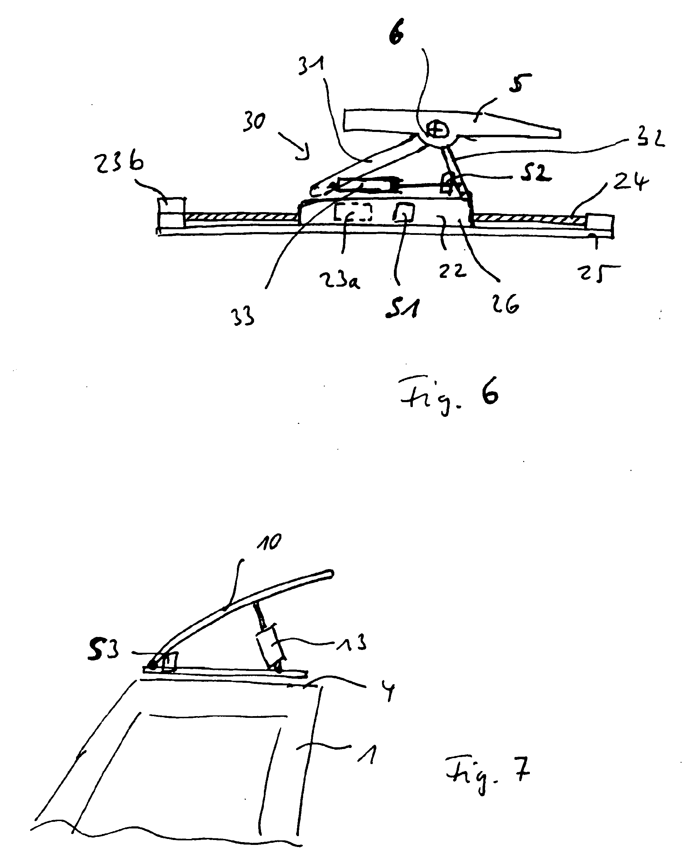

In der Figur 6 ist eine weitere Ausführungsform dargestellt, bei der auf der Verschiebeeinrichtung 21 eine Hubeinrichtung 30 angeordnet ist, die ein Paar Hebelarme 31 und entsprechend ein Paar Ausstellarme 32 aufweist, wobei im gemeinsamen Gelenkpunkt von Ausstellarm und Hebelarm die Sattelkupplung 5 in einem entsprechenden Lagerbock 6 befestigt ist. Zum Aufrichten und Absenken der Hubeinrichtung 30 ist eine zweite motorische Antriebseinrichtung 33 in Form eines Druckmittelzylinders vorgesehen. Auch dieser Druckmittelzylinder erfüllt die Formschlussbedingung beim Anheben und Absenken der Sattelkupplung.

Die Hubeinrichtung 30 verfügt über einen zweiten Positionssensor S2, der die Hubhöhe beispielsweise anhand des Schwenkwinkels des Ausstellarms 32 detektiert. Die motorische Antriebseinrichtung 33 ist ebenso wie der Positionssensor S2 an die in der Figur 6 nicht dargestellte Steuereinrichtung angeschlossen.

In der Figur 7 ist ein verstellbarer Windabweiser 10 auf dem Dach 4 eines Zugfahrzeugs 1 dargestellt. Die Verstellung des Windabweisers 10 erfolgt über eine dritte motorische Antriebseinheit in Form eines Druckmittelzylinders 13. Über einen dritten Positionssensor S3 wird die Neigung des Windabweisers 10 detektiert. Auch der dritte Positionssensor S3 und die dritte motorische Antriebseinrichtung 13 sind an die Steuereinrichtung angeschlossen.

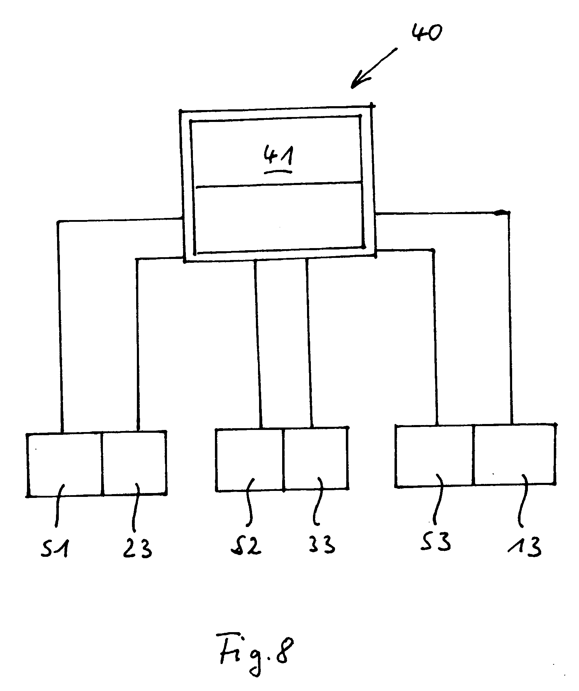

In der Figur 8 ist ein Block-Schaltbild des Steuergerätes dargestellt. An die Steuereinrichtung 40, die eine Anzeigeeinrichtung 41 aufweist, sind die Positionssensoren S1, S2 und S3 sowie die entsprechenden Antriebseinrichtung 23, 33 und 13 angeschlossen. In einer Erweiterung können auch die seitlichen Windabweiser mit ihrem Antriebseinrichtungen und Positionssensoren S4 sowie die Federeinrichtung des Aufliegers einbezogen sein. Das Steuergerät ist vorzugsweise im Fahrerhaus platziert, so dass der Fahrer auch während der Fahrt sämtliche Informationen an der Anzeigeeinrichtung 41 ablesen kann und gegebenenfalls über die Steuereinrichtung 40 auch eine Verschiebung der Sattelkupplung und/oder des Windabweisersystems vornehmen kann. Auch kann das Steuergerät über entsprechende Regelkreise verfügen, so dass eine Verstellung der Antriebseinrichtungen 13, 23 und 33 automatisch erfolgen kann, je nachdem, welche Fahrsituation gegeben ist.

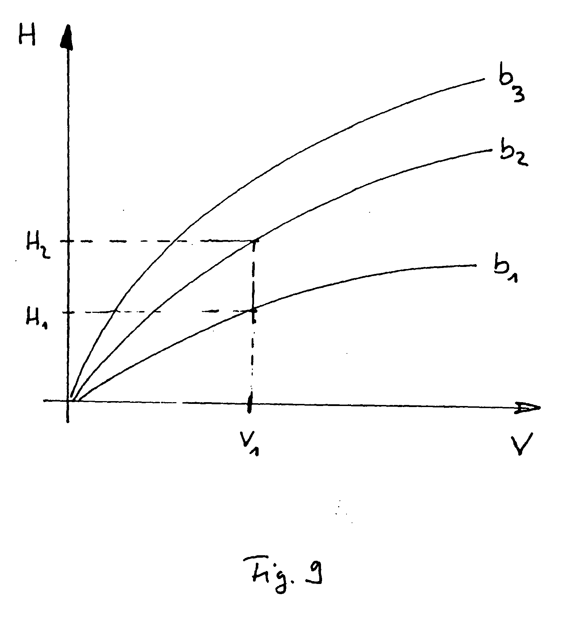

In der Figur 9 ist ein exemplarisches Kennlinien-Diagramm dargestellt, in dem die Geschwindigkeit V gegen die Hubhöhe H für verschiedene Spaltbreiten b₁, b₂, b₃ (Breiten des Zwischenraums 3) aufgetragen sind. Bei einer Geschwindigkeit V₁ wird von der Steuereinrichtung 40 an der Verstellvorrichtung 20 für die Spaltbreite b₁ eine Hubhöhe H₁ eingestellt. Sollte jedoch bei der Geschwindigkeit V₁ die Spaltbreite b₁ und die Höhe H₁ aufgrund der Straßenverhältnisse nicht praktikabel sein, kann der Fahrer oder die Steuereinrichtung automatisch auf eine andere Kennlinie, z. Bsp. für b₂ wechseln, mit der Folge, dass die Verstellvorrichtung sowohl in horizontaler Richtung als auch in vertikaler Richtung verfahren wird. Bei Änderung der Geschwindigkeit V erfolgt entlang der Kennlinie b₂ jeweils eine Anpassung.

### Bezugszeichenliste

- 1: Zugfahrzeug
- 2, 2': Auflieger
- 3: Zwischenraum
- 4: Dach
- 5: Sattelkupplung
- 6: Lagerbock
- 10a, 10'a, 10b: Windabweiser
- 13: dritte Antriebseinrichtung
- 20: Verstelleinrichtung
- 21: Verschiebeeinrichtung
- 22: Spindelmutter
- 23a,b: erste Antriebseinrichtung
- 24: Antriebsspindel
- 25: Rahmen
- 26: Schlitten
- 27: Führungsschiene
- 28: Traverse
- 29: Traverse
- 30: Hubeinrichtung
- 31: Hebelarm
- 32: Ausstellarm
- 33: zweite Antriebseinrichtung
- 40: Steuereinrichtung
- 41: Anzeigeeinrichtung
- S1: erster Positionssensor
- S2: zweiter Positionssensor
- S3: dritter Positionssensor
- S4: vierter Positionssensor

## Patentansprüche

1. Vorrichtung zur Verringerung des Luftwiderstandes eines Sattelzuges aus Zugfahrzeug (1) und Auflieger (2) mit einer Verschiebeeinrichtung (21) zum Verschieben der Sattelkupplung (5) in Längsrichtung des Zugfahrzeugs (1), mit mindestens einem schwenkbar am Fahrerhaus des Zugfahrzeugs (1) angeordneten Windabweiser (10a, 10b), wobei die Verschiebeeinrichtung (21) und der Windabweiser (10a, 10b) über motorische Antriebseinrichtungen (13, 23a, 23b) und Positionssensoren (S1, S3) verfügen, wobei die Antriebseinrichtungen (13, 23a, 23b) und die Positionssensoren (S1, S3) an eine gemeinsame Steuereinrichtung (40) angeschlossen sind.

2. Vorrichtung nach Anspruch 1, wobei eine Hubeinrichtung (30) zum Anheben oder Absenken der Sattelkupplung (5) vorgesehen ist, wobei die Hubeinrichtung (30) über eine motorische Antriebseinrichtung (33) und einen Positionssensor (S2) verfügt, wobei die Antriebseinrichtung (33) und der Positionssensor (S2) an die gemeinsame Steuereinrichtung (40) angeschlossen sind.

3. Vorrichtung zur Verringerung des Luftwiderstandes eines Sattelzuges aus Zugfahrzeug (1) und Auflieger (2) mit einer Hubeinrichtung (30) zum Anheben oder Absenken der Sattelkupplung (5), mit mindestens einem schwenkbar am Fahrerhaus des Zugfahrzeugs (1) angeordneten Windabweiser (10a, 10b), wobei die Hubeinrichtung (30) und der Windabweiser (10a, 10b) über motorische Antriebseinrichtungen (13, 33) und Positionssensoren (S2, S3) verfügen, wobei die Antriebseinrichtungen (13, 33) und die Positionssensoren (S2, S3) an eine gemeinsame Steuereinrichtung (40) angeschlossen sind.

4. Vorrichtung nach Anspruch 3, wobei eine Verschiebeeinrichtung (21) zum Verschieben der Sattelkupplung (5) in Längsrichtung des Zugfahrzeugs (1) vorgesehen ist, wobei die Verschiebeeinrichtung (21) über eine motorische Antriebseinrichtung (23a, 23b) und einen Positionssensor (S1) verfügt, wobei die Antriebseinrichtung (23a, 23b) und der Positionssensor (S1) an die gemeinsame Steuereinrichtung (40) angeschlossen sind.

## Claims

1. Device for reducing the air resistance of a semitrailer vehicle, comprising a traction vehicle (1) and a semitrailer (2) having a displacement device (21) for displacing the fifth wheel (5) in the longitudinal direction of the traction vehicle (1), having at least one wind deflector (10a, 10b) which is arranged pivotably on the driver's cabin of the traction vehicle (1), the displacement device (21) and the wind deflector (10a, 10b) having motorised drive devices (13, 23a, 23b) and position sensors (S1, S3), the drive devices (13, 23a, 23b) and the position sensors (S1, S3) being connected to a common control device (40).

2. Device according to claim 1, there being provided a lifting device (30) for raising or lowering the fifth wheel (5), the lifting device (30) having a motorised drive device (33) and a position sensor (S2), the drive device (33) and the position sensor (S2) being connected to the common control device (40).

3. Device for reducing the air resistance of a semitrailer vehicle comprising a traction vehicle (1) and a semitrailer (2) having a lifting device (30) for raising or lowering the fifth wheel (5), having at least one wind deflector (10a, 10b) which is arranged pivotably on the driver's cabin of the traction vehicle (1), the lifting device (30) and the wind deflector (10a, 10b) having motorised drive devices (13, 33) and position sensors (S2, S3), the drive devices (13, 33) and the position sensors (S2, S3) being connected to a common control device (40).

4. Device according to claim 3, there being provided a displacement device (21) for displacing the fifth wheel (5) in the longitudinal direction of the traction vehicle (1), the displacement device (21) having a motorised drive device (23a, 23b) and a position sensor (S1), the drive device (23a, 23b) and the position sensor (S1) being connected to the common control device (40).

## Revendications

1. Dispositif conçu pour diminuer la résistance à l'air d'un train routier composé d'un véhicule tracteur (1) et d'une semi-remorque (2), comprenant un système de coulissement (21) destiné à faire coulisser l'accouplement à sellette (5) dans la direction longitudinale dudit véhicule tracteur (1) ; et au moins un déflecteur d'air (10a, 10b) agencé à pivotement sur la cabine de conduite dudit véhicule tracteur (1), dispositif dans lequel ledit système de coulissement (21) et ledit déflecteur d'air (10a, 10b) sont équipés de systèmes d'entraînement motorisés (13, 23a, 23b) et de détecteurs de positions (S1, S3), lesdits systèmes d'entraînement (13, 23a, 23b) et lesdits détecteurs de positions (S1, S3) étant raccordés à un système de commande (40) commun.

2. Dispositif selon la revendication 1, dans lequel un système de levage (30) est prévu pour soulever ou abaisser l'accouplement à sellette (5), ledit système de levage (30) étant équipé d'un système d'entraînement motorisé (33) et d'un détecteur de positions (S2), ledit système d'entraînement (33) et ledit détecteur de positions (S2) étant raccordés au système de commande (40) commun.

3. Dispositif conçu pour diminuer la résistance à l'air d'un train routier composé d'un véhicule tracteur (1) et d'une semi-remorque (2), comprenant un système de levage (30) destiné à soulever ou abaisser l'accouplement à sellette (5) ; et au moins un déflecteur d'air (10a, 10b) agencé à pivotement sur la cabine de conduite dudit véhicule tracteur (1),
dispositif dans lequel ledit système de levage (30) et ledit déflecteur d'air (10a, 10b) sont équipés de systèmes d'entraînement motorisés (13, 33) et de détecteurs de positions (S2, S3), lesdits systèmes d'entraînement (13, 33) et lesdits détecteurs de positions (S2, S3) étant raccordés à un système de commande (40) commun.

4. Dispositif selon la revendication 3, dans lequel un système de coulissement (21) est prévu pour faire coulisser l'accouplement à sellette (5) dans la direction longitudinale du véhicule tracteur (1), ledit système de coulissement (21) étant équipé d'un système d'entraînement motorisé (23a, 23b) et d'un détecteur de positions (S1), ledit système d'entraînement (23a, 23b) et ledit détecteur de positions (S1) étant raccordés au système de commande (40) commun.
